(19) Europäisches Patentamt
European Patent Office
Office européen des brevets

(11) **EP 1 621 437 B1**

(12) **EUROPÄISCHE PATENTSCHRIFT**

(45) Veröffentlichungstag und Bekanntmachung des Hinweises auf die Patenterteilung:
**29.12.2010 Patentblatt 2010/52**

(51) Int Cl.:
*B60W 10/02* *(2006.01)* *G01G 19/08* *(2006.01)*

(21) Anmeldenummer: **05013754.6**

(22) Anmeldetag: **25.06.2005**

(54) **Verfahren und Einrichtung zum Steuern eines Antriebsstrangs eines Fahrzeugs**

Method and device for controling a Vehicle propulsion system

Dispositif et procédure pour contrôler le train d'entraînement d'un véhicule

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **22.07.2004 DE 102004035563**

(43) Veröffentlichungstag der Anmeldung:
**01.02.2006 Patentblatt 2006/05**

(73) Patentinhaber: **Schaeffler Technologies GmbH & Co. KG**
**91074 Herzogenaurach (DE)**

(72) Erfinder: **Eich, Jürgen, Dr.**
**77815 Bühl (DE)**

(56) Entgegenhaltungen:
EP-A- 0 178 781      EP-B- 0 932 033
DE-A1- 10 312 209    GB-A- 2 213 550
JP-A- 62 231 841     US-B1- 6 701 224

**Beschreibung**

Die Erfindung betrifft ein Verfahren gemäß dem Oberbegriff des Patentanspruches 1 und dem Oberbegriff des Patentanspruches 2 und eine Einrichtung zum Steuern eines Antriebsstrangs eines Fahrzeugs gemäß dem Oberbegriff des Patentanspruches 8.

In modernen Kraftfahrzeugen werden zunehmend zumindest teilweise automatisierte Antriebsstränge eingesetzt, da damit nicht nur der Komfort erhöht, sondern zusätzlich der Verbrauch vermindert werden kann.

Zur Steuerung einer von einem Aktor betätigten Kupplung und/oder eines von einem Aktor betätigten Getriebes ist eine möglichst genaue Kenntnis verschiedener Betriebsparameter des Fahrzeugs, insbesondere des augenblicklichen, von einem Antriebsmotor abgegebenen Moments, der Drehzahl der Kurbelwelle des Antriebsmotors, sowie der Geschwindigkeit des Fahrzeugs, der augenblicklichen Getriebeübersetzung usw. erforderlich.

Die DE 103 12 209 A1 offenbart ein Steuerverfahren und eine Steuervorrichtung zum Ändern des Übersetzungsverhältnisses in einem automatisierten Schaltgetriebe, welches die tatsächliche Beschleunigung des Fahrzeugs verwendet, wobei dieses Beschleunigungssignal an einer beliebigen Stelle am Ausgang der Kupplung E erfasst wird die Ausgangsseite der Kupplung E ist dabei mit den Rädern verbunden. Das von der DE 103 12 209 A1 genutzte Beschleunigungssignal ist daher abhängig von den Raddrehzahlen.

Der Erfindung liegt die Aufgabe zugrunde, ein Verfahren und eine Einrichtung zum Steuern eines Antriebsstrangs eines Kraftfahrzeugs der Eingangs genannten Art derart zu verbessern, dass eine genauere und beispielsweise von einem rutschenden oder blockierenden Fahrzeugrads nicht störend beeinflusste Steuerung bzw. Regelung möglich ist.

Die vorliegende Aufgabe wird erfindungsgemäß gelöst durch ein Verfahren zum Steuern eines Antriebsstrangs eines Kraftfahrzeugs mit den Merkmalskombinationen des Patentanspruches 1, welcher Antriebsstrang einen Antriebsmotor, wenigstens eine von einem Kupplungsaktor betätigte Kupplung und ein Getriebe enthält, wobei der Aktor von einem elektronischen Steuergerät in Abhängigkeit von Sensorsignalen gesteuert wird, die Betriebsparameter des Fahrzeugs erfassen, bei welchem Verfahren wenigstens einer der für die Steuerung der Kupplung maßgeblichen Betriebsparameter unter Nutzung des Ausgangssignals eines zusätzlich vorhandenen Beschleunigungssensors zum Erfassen der Fahrzeugbeschleunigung unabhängig von den Raddrehzahlen ermittelt wird.

Das vorgenannte Verfahren ist beispielsweise in Antriebssträngen mit konventionellem Getriebe und lediglich automatisierter Kupplungsbetätigung einsetzbar.

Eine weitere Lösung der Erfindungsaufgabe, die in Kombination mit dem vorgenannten Verfahren einsetzbar ist, wird mit einem Verfahren zum Steuern eines Antriebsstrangs eines Kraftfahrzeugs gemäß der Merkmalskombination des Patentanspruches 2, erzielt, welcher Antriebsstrang einen Antriebsmotor, wenigstens eine Kupplung und ein von einem Getriebeaktor betätigtes Getriebe enthält, wobei der Aktor von einem elektronischen Steuergerät in Abhängigkeit von Sensorsignalen gesteuert wird, die Betriebsparameter des Fahrzeugs erfassen, bei welchem Verfahren wenigstens einer der für die Steuerung des Getriebes maßgeblichen Betriebsparameter unter Nutzung des Ausgangssignals eines zusätzlich vorhandenen Beschleunigungssensors zum Erfassen der Fahrzeugbeschleunigung unabhängig von den Raddrehzahlen ermittelt wird.

Das vorgenannte Verfahren ist beispielsweise in einem Antriebsstrang einsetzbar, der mit einem hydraulischen Wandler als Anfahrkupplung arbeitet und ein konventionelles automatisches Getriebe, das mit Planetensätzen arbeitet, verwendet.

Der zusätzlich vorhandene Beschleunigungssensor, mit dem die Fahrzeugbeschleunigung unabhängig von den Raddrehzahlen bestimmt werden kann, kann in unterschiedlichster Weise eingesetzt werden:

Beispielsweise kann aus der zeitlichen Änderung wenigstens einer Raddrehzahl und dem Signal des Beschleunigungssensors der Steigerungswinkel der Fahrbahn bestimmt werden, auf der das Fahrzeug fährt.

Weiter kann aus der von dem Antriebsmotor auf das Fahrzeug aufgebrachten Vortriebskraft, der Fahrwiderstandskraft auf ebener Fahrbahn und der Fahrbahnsteigung die Fahrzeugmasse bestimmt werden.

Bei einer weiteren vorteilhaften Durchführungsform des Verfahrens kann im regelungstechnischen Sinne eines Beobachters aus der aktuellen Vortriebskraft, dem der aktuellen Fahrgeschwindigkeit entsprechenden nominellen Fahrwiderstand und der letztermittelten Fahrzeugmasse das Ausgangssignal des Beschleunigungssensors geschätzt werden, das aktuelle Ausgangssignal des Beschleunigungssensors mit dem geschätzten Ausgangssignal verglichen werden und die Fahrzeugmasse auf Basis des Vergleichsergebnisses aktualisiert werden.

Zusätzlich kann das erfindungsgemäße Verfahren dadurch weitergebildet werden, dass das von der Kupplung übertragene Moment bestimmt wird, indem die auf das Fahrzeug wirkende Vortriebskraft aus der Summe des Produkts aus Fahrzeugmasse und der vom Beschleunigungssensor gemessenen Fahrzeugbeschleunigung und der Fahrwiderstandskraft bei ebener Fahrbahn bestimmt wird und aus der Vortriebskraft, der aktuellen Übersetzung und ggf. dem Reibungsmoment des Antriebsstrangs zwischen Kupplung und angetriebenen Fahrzeugrädern das von der Kupplung übertragene Moment bestimmt wird.

Eine vorteilhafte Durchführungsform des erfindungsgemäßen Verfahrens besteht weiterhin darin, dass die von einem Drehzahlsensor gemessene Drehzahl eine Fahrzeugrades mit Hilfe des Ausgangssignals des Beschleunigungssensors plausibilisiert wird.

In vorrichtungstechnischer Hinsicht wird die Erfindungsaufgabe mit einer Einrichtung zum Steuern eines Antriebsstrangs eines Fahrzeugs gemäß dem Patentanspruch 8 erzielt, welcher Antriebsstrang einen Antriebsmotor, wenigstens eine von einem Kupplungsaktor betätigte Kupplung und ein Getriebe enthält und welche Steuereinrichtung Sensoren zum Erfassen von Betriebsparametern des Fahrzeugs, einen Mikroprozessor und eine elektronische Speichereinrichtung mit einem Programm zur Steuerung des Kupplungsaktors in Abhängigkeit von den Signalen der Sensoren enthält, wobei die Steuereinrichtung einen zusätzlich vorhandenen Beschleunigungssensor zum Erfassen von Beschleunigungen des Fahrzeugs in dessen Längsrichtung unabhängig von den Raddrehzahlen enthält und das Programm zum Durchführen eines oder mehrerer der Verfahren nach einem der vorgenannten Ansprüche ausgebildet ist.

Bei einer vorteilhaften Ausführungsform der erfindungsgemäßen Steuereinrichtung ist ein Getriebeaktor zum Betätigen des Getriebes vorgesehen, der von dem elektronischen Steuergerät in Abhängigkeit von den Sensorsignalen und in der Speichereinrichtung abgelegten Programmen gesteuert wird.

Die Erfindung wird im Folgenden anhand schematischer Zeichnungen beispielsweise und in weiteren Einzelheiten erläutert.

In den Figuren stellen dar:

Fig. 1     eine Prinzipdarstellung eines Fahrzeugantriebsstrangs; und

Fig. 2     ein Prinzipschaltbild einer Einrichtung zum Schätzen der Fahrzeugmasse

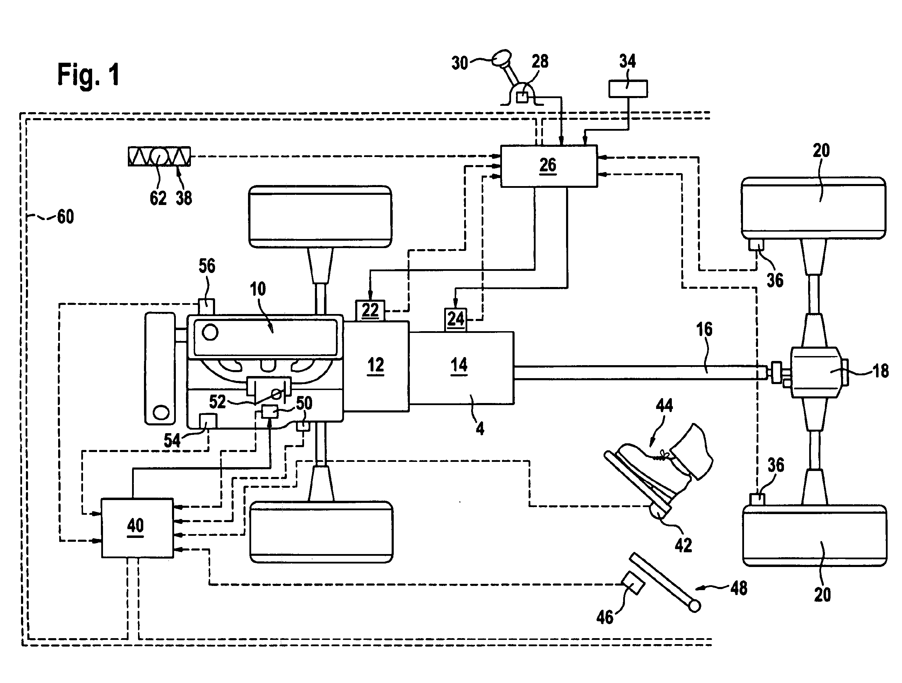

Gemäß Figur 1 weist ein Antriebsstrang eines Fahrzeugs einen Antriebsmotor 10 auf, der über eine Kupplung 12 mit einem Getriebe 14 verbunden ist, dessen Ausgangswelle über eine Kardanwelle 16 und ein Differential 18 die Hinterräder 20 des Kraftfahrzeugs antreibt. Es versteht sich, dass der Antriebsstrang auch für einen Vorderantrieb oder einen Allradantrieb abwandelbar ist.

Im dargestellten Beispiel ist die Kupplung 12 eine konventionelle Reibungskupplung, deren Betätigungshebel von einem Kupplungsaktor 22, beispielsweise einem Elektromotor, betätigt wird.

Das Getriebe 14 ist beispielsweise ein automatisiertes Handschaltgetriebe, dessen Schaltglieder von einem Getriebeaktor 24 zum Wählen und Schalten eines Gangs betätigt werden können. Dazu enthält der Getriebeaktor 24 vorzugsweise zwei Elektromotoren.

Zur Steuerung des Kupplungsaktors 22 und des Getriebeaktors 24 dient ein Getriebesteuergerät 26, dessen Eingänge mit Sensoren zur Erfassung der Stellung des Kupplungsaktors 22, des Getriebeaktors 24, einem Sensor 28 zum Erfassen der Stellung eines Getriebewählhebels 30, einer Geschwindigkeitsregelanlage 34, Raddrehzahlsensoren 36 (es sind nur die der Hinterräder dargestellt), einem Beschleunigungssensor 38 zum direkten Erfassen der Beschleunigung in Längsrichtung des Fahrzeugs, sowie ggf. weiteren Sensoren verbunden sind. Das Getriebesteuergerät 26 enthält einen Mikroprozessor und Speichereinrichtungen, in denen Programme gespeichert sind, entsprechend denen die Aktoren 22 und 24 abhängig von den Eingangssignalen gesteuert werden.

Zur Steuerung des Antriebsmotors 10, beispielsweise einer Hubkolbenbrennkraftmaschine, ist ein Motorsteuergerät 40 vorgesehen, dessen Eingänge mit einem Sensor 42 zum Erfassen der Stellung eines Fahrpedals 44, einem Sensor 46 zum Erfassen der Stellung eines Bremspedals 48, einem Sensor 49 zum Erfassen der Drehzahl der Kurbelwelle der Brennkraftmaschine, einem Sensor zum Erfassen der Stellung eines Aktors 50 zum Verstellen eines Leistungsstellgliedes 52 der Brennkraftmaschine, einem Sensor 54 zum Erfassen des der Brennkraftmaschine zuströmenden Luftdurchsatzes, einem Sensor 56 zum Erfassen der Temperatur der Brennkraftmaschine 10 sowie ggf. weiteren Sensoren verbunden. Ein Ausgang des Motorsteuergeräts 40 steuert den Aktor 50 zum Betätigen des Leistungsstellgliedes der Brennkraftmaschine.

Die Steuergeräte 26 und 40 sowie ggf. weitere Steuergeräte (z.B. ein ABS-Steuergerät, ein Fahrstabilitätssteuergerät usw.) sind über eine Bus-Leitung 60 miteinander verbunden, so dass in einem Steuergerät vorhandene Daten zum anderen übertragen werden können und die Funktionalitäten der Steuergeräte in unterschiedlicher Weise auf verschiedene Hardwareeinheiten aufgeteilt werden können oder in einer einzigen zentralen Einheit zusammengefasst werden können.

Mit Ausnahme des Beschleunigungssensors 38 sind der Aufbau und die Funktion des Antriebsstrangs gemäß Fig. 1 an sich bekannt, so dass sie nicht im Einzelnen erläutert werden.

Abhängig von der Stellung des Fahrpedals 44, der Geschwindigkeit des Fahrzeugs, dem Drehmoment und der Drehzahl des Antriebsmotors 10 bestimmt das Getriebesteuergerät 26 entsprechend in ihm abgelegten Programmen eine jeweils zu schaltende Übersetzung des Getriebes 14. Dabei richtet sich die jeweils zu schaltende Übersetzung bzw. der einzulegende Gang beispielsweise zusätzlich nach den Fahrgewohnheiten des Fahrers, nach der Raschheit der Betätigung des Fahrpedals 44 usw., wobei eine Solldrehzahl des Motors derart eingestellt wird, dass einerseits ein niedrigerer Kraftstoffverbrauch erzielt wird und andererseits jeweils ein ausreichendes Beschleunigungsvermögen für das Fahrzeug zur Verfügung steht.

Für die Betätigung der Kupplung 12 bei einem Gangwechsel spielt eine im Getriebesteuergerät 26 abgelegte Kennlinie, die das jeweils übertragbare Kupplungsmoment abhängig von der Stellung eines Betätigungsgliedes der Kupplung bzw. des Kupplungsaktors 22 angibt, eine wichtige Rolle. Das jeweils übertragbare Kupplungsmoment wird vorteilhafterweise an das vom Motor augenblicklich abgegebene Moment angepasst, so dass die Kupplung jeweils nur das erforderliche Moment übertragen kann und rasch geöffnet bzw. geschlossen werden kann, wobei beim Öffnen der Kupplung das Motormoment durch entsprechende Steuerung des Laststellgliedes (und/oder des Zündzeitpunktes) kurzzeitig zurückgenommen wird, um beim Schließen der Kupplung wieder anzusteigen. Steuerverfahren und Vorrichtungen zu deren Durchführung sind beispielsweise aus der DE 696 10 351 T2 oder der DE 199 46 335 A1 bekannt.

Da sich das Übertragungsverhalten einer Kupplung in Folge von Fertigungstoleranzen und Verschleiß ändern kann, muss die Kupplungskennlinie in an sich bekannter Weise immer wieder adaptiert bzw. abgeglichen werden. Diese Adaption erfolgt normalerweise unter Verwendung des vom Motor abgegebenen Moments (das aus der Stellung des Laststellgliedes und/oder dem Signal des Luftdurchsatzsensors) sowie der Motordrehzahl bekannt ist, und unter Verwendung von Drehzahlen der Fahrzeugräder und/oder der Drehzahl der Ausgangswelle eines Getriebes (Sensor nicht eingezeichnet). Die Steuerung der jeweiligen Getriebeübersetzung erfolgt ebenfalls auf Basis von Raddrehzahlen. Damit es im Falle eines Signalfehlers oder bei Blockieren der Räder beim Bremsen nicht zu einer gefährlichen Schaltung in einen zu niedrigen Gang kommt, ist eine Plausibilisierung der Raddrehzahlen wichtig, d.h. eine Überprüfung, ob das jeweilige Raddrehzahlsignal aussagefähig für die tatsächliche Fahrzeuggeschwindigkeit ist. In den im Getriebesteuergerät 26 abgelegten Fahrprogrammen erfolgt eine Auswertung der Motormomenten- und Drehzahlsignale unter Bewertung des aktuellen Betriebszustandes des Fahrzeugs, um beispielsweise bei Berg- oder Talfahrt eine der Situation besser entsprechende Gangstufe im Getriebe einzulegen.

Um die verschiedenen Einflussgrößen für ein adäquates Fahrprogramm und eine komfortable Betätigung der Kupplung genauer steuern zu können, ist erfindungsgemäß zusätzlich zu den genannten Sensoren der Beschleunigungssensor 38 vorgesehen. Ein solcher Beschleunigungssensor ist beispielsweise aus der DE 694 12 216 T2 bekannt. Er enthält eine träge Masse 62 die in Vorwärts-/Rückwärtsrichtung des Fahrzeugs gegen die Kraft von Federn beweglich ist. Die Auslenkung der Masse 62 bzw. die Kraft der Aufschlagung der Federn, die ein Maß für die Verzögerung/ Beschleunigung des Fahrzeugs liefert, wird im Motorsteuergerät 40 ausgewertet. Es versteht sich, dass der Beschleunigungssensor 38 in Längsrichtung des Fahrzeugs empfindlich ist und sowohl von seinem Messbereich her (+/- ca. 1g) als auch von der Frequenzbandbreite her (ca. 10 Hz) der Längsdynamik eines Kraftfahrzeugs entspricht.

Im Folgenden werden Beispiele für vorteilhafte Verwendungen des Beschleunigungssensors 38 und daraus mögliche Verbesserungen der Steuerungen bzw., wenn die Steuerungen mit Rückkopplungen arbeiten, Regelungen erläutert:

1. Erkennung von Bergfahrt

Ein mit einer Trägheitsmasse arbeitender Beschleunigungssensor zeigt abhängig von seiner Ausrichtung zur Horizontalen auch stets den in seiner Messrichtung wirksamen Anteil der Beschleunigung. Fährt ein Fahrzeug mit einer Geschwindigkeit v(t) auf einer Fahrbahn mit einem Steigungswinkel $\gamma$, dann beträgt das Ausgangssignal des Beschleunigungssensors bei relativ zum Fahrzeug waagerechter Montage in Längsrichtung des Fahrzeugs:

$$aS = aF + g \cdot \sin \gamma = dv(t)/dt + g \cdot \sin \gamma \qquad (1),$$

wobei aS das Ausgangssignal des Beschleunigungssensors und aF die Fahrzeugbeschleunigung ist.

Damit lässt sich unmittelbar die aktuelle Fahrbahnsteigung nach folgendem Ausdruck berechnen:

$$\gamma = \arcsin [(aS - dv(t)/dt)/g] \quad (2)$$

Somit lässt sich mit Hilfe des Beschleunigungssensors 38 und der üblicherweise zur Bestimmung der Fahrzeuggeschwindigkeit herangezogenen Sensoren ermitteln, ob das Fahrzeug auf ebener Straße, bergab oder bergauf fährt. Bei Bergabfahrt kann das Fahrprogramm je nach Gefälle und Fahrprofil so eingestellt werden, dass bereits bei geringeren Motormomenten auf einen höheren Gang geschaltet wird, oder, um das Bremsmoment des Motors zu nutzen, auf einen niedrigeren Gang geschaltet wird. Bei Bergauffahrt kann auf ein Programm geschaltet werden, das bereits bei geringeren Geschwindigkeiten als in der Ebene auf einen niedrigeren Gang zurückschaltet.

2. Bestimmung der Fahrzeugmasse

Die Fahrzeugmasse kann im Fahrbetrieb abhängig vom Beladungszustand stark variieren, so dass ihre Kenntnis eine Adaption sowohl der Schaltprogramme als auch der Kupplungsbetätigungsprogramme ermöglicht.
Für die Fahrzeug-Längsbeschleunigung gilt:

$$aF = (FA - FW)/mF \quad (3),$$

wobei FA = auf das Fahrzeug vom Antriebsmotor her aufgebrachte Vortriebskraft, die aus dem Motormoment und der Getriebeübersetzung berechnet werden kann und die auf die Fahrzeugmasse mF ebenso wirkt wie die Fahrwiderstandskraft FW. Die Fahrwiderstandskraft FW setzt sich bei nicht betätigter Bremse und unter Vernachlässigung unbekannter Windkräfte (z.B. Gegenwind/oder Rückenwind) zusammen aus:

$$FW = FWn + FB \quad (4),$$

wobei FWn den nominellen Fahrwiderstand bezeichnet, der für ein gegebenes Fahrzeug gemessen und im Allgemeinen als ein Zweig einer quadratischen Parabel beschrieben werden kann. FB bezeichnet die Hangabtriebskraft, die beträgt:

$$FB = mF * g * \sin \gamma \quad (5)$$

Somit ergibt sich:

$$aS = (FA - FWn)/mF \quad (6)$$

Die Fahrzeugmasse kann somit nach folgendem Ausdruck berechnet werden:

$$mF = (FA - FWn)/aS \quad (7)$$

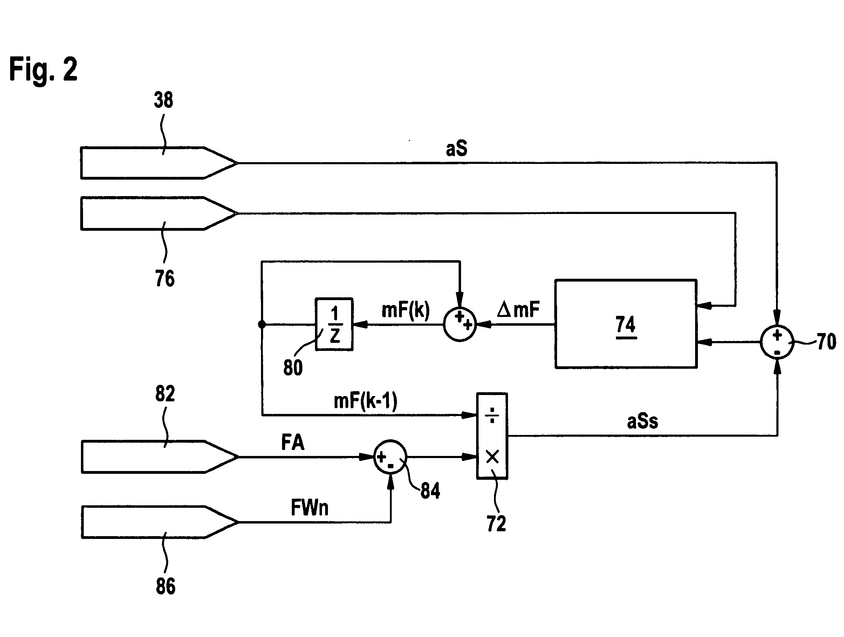

Problematisch dabei ist ein sehr kleiner Nenner, wenn das Ausgangssignal des Beschleunigungssensors annähernd Null ist. Gute Ergebnisse bei der Berechnung der Fahrzeugmasse sind zu erwarten, wenn mF in Form einer regelungstechnischen Parameterschätzung ermittelt wird, wie anhand Figur 2 erläutert wird:

Der Beschleunigungssensor 38 ist mit einem Eingang eines Differenzgliedes 70 verbunden, dessen anderer Eingang mit dem Ausgang eines Rechengliedes 72 verbunden ist. Der Ausgang des Differenzgliedes 70 ist mit einem Eingang eines Korrekturgliedes 74 verbunden, dessen anderer Eingang mit dem Ausgang eines Fahrzustandssignalgebers 76 verbunden ist. Der Ausgang des Korrekturgliedes 74 ist mit einem Eingang eines Adaptionsgliedes 78 verbunden, dessen Ausgang mit einem Eingang eines Verzögerungsgliedes 80 verbunden ist. Der Ausgang des Verzögerungsgliedes 80 ist mit einem weiteren Eingang des Adaptionsgliedes 78 und einem weiteren Eingang des Rechengliedes 72 verbunden.

Ein Signalgeber 82, an dessen Ausgang ein Signal FA liegt, das der vom Antriebsmotor auf das Fahrzeug aufgebrachten Vortriebskraft entspricht, ist mit einem Eingang eines Differenzgliedes 84 verbunden, dessen anderer Eingang mit einem weiteren Signalgeber 86 verbunden ist, an dessen Ausgang ein dem nominellen Fahrwiderstand FWn entsprechendes Signal liegt. Der Ausgang des Differenzgliedes 84 ist mit einem weiteren Eingang des Rechengliedes 72 verbunden.

Die Funktion der beschriebenen Schaltung ist folgende:

Das Differenzglied 84 berechnet aus FA und FWn den Klammerausdruck der vorstehenden Formel 7 und führt ihn dem einen Eingang des Rechengliedes 72 zu, an dessen anderem Eingang ein Signal mF(k-1) liegt, das einer in einem zurückliegenden Rechenschritt ermittelten Fahrzeugmasse entspricht. Als Startwert der regelungstechnisch als Kreisschaltung arbeitenden Schaltung kann ein typischer Fahrzeugmassenwert verwendet werden oder ein aus einem fahrzeugspezifischen Speicher ausgelesener Wert. In dem Rechenglied 72 wird anhand der Formel 7 ein geschätzter Wert aSs der Fahrzeugbeschleunigung ermittelt, der im Differenzglied 70 mit der vom Beschleunigungssensor 38 ermittelten tatsächlichen augenblicklichen Fahrzeugbeschleunigung aS verglichen wird. Die Differenz aus beiden Signalen wird dem Korrekturglied 74 zugeführt, das auf Basis des Unterschiedes des zwischen aS und aSs (Vorhersagefehler) sowie unter Berücksichtigung des aktuellen Fahrzustandes eine Korrekturgröße $\Delta$ mF bestimmt, die dem Adaptionsglied 78 zugeführt wird. Das vom Fahrzustandssignalgeber 76 gelieferte Fahrzustandssignal kann beispielsweise "keine Bremsbetätigung" anzeigen oder andere Betriebszustände signalisieren, wie "Anfahren", "Fahren", "Schalten", "Testbetrieb" usw. Der Fahrzustandssignalgeber 76 kann somit sowohl Sensoren enthalten als auch in Steuergeräten vorhandene Informationen weitergeben.

Im Adaptionsglied 78 wird die für den bisher geschilderten Rechengang verwendete Fahrzeugmasse mF(k-1) in die aktualisierte Fahrzeugmasse mF(k) umgewandelt, indem beispielsweise mF(k-1) entsprechend $\Delta$ mF korrigiert wird (je nach Vorzeichen addiert oder subtrahiert). Die aktualisierte Fahrzeugmasse mF(k) wird im Verzögerungsglied 80 gehalten und steht in dem nachfolgenden Rechentakt als Fahrzeugmasse mF(k-1) zur Verfügung. In der Verbindungsleitung zwischen dem Adaptionsglied 78 und dem Verzögerungsglied 80 ist somit jeweils die aktualisierte Fahrzeugmasse mF(k) verfügbar, die der tatsächlichen Fahrzeugmasse möglichst genau entspricht.

Die verbesserte Kenntnis der Fahrzeugmasse sowie der aktuellen Fahrbahnsteigung bieten Vorteile bei der automatischen Gangwahl in der Steuerung automatischer Getriebe und bei der optimalen Ansteuerung der Kupplung.

Für das Korrekturglied 74 sind verschiedene Ausführungsformen möglich. Die Grobstruktur ist beispielsweise folgende:

Falls Fahrzustand für Korrektur geeignet;
dann berechne $\Delta$mF als Funktion von (aS-aSs)
sonst

$$\Delta mF = 0$$

Ende

Ein für die Korrektur geeigneter Fahrzustand setzt insbesondere voraus, dass am Fahrzeug keine Bremse betätigt ist, da in diesem Fall wesentliche Einflüsse auf die Fahrzeugbeschleunigung unbekannt sind. Darüber hinaus sind Fahrzustände ungeeignet, während derer die Antriebskraft FA nur mit eingeschränkter Genauigkeit bestimmt werden kann. Hierzu können folgende Situationen zählen, deren Relevanz jedoch von Fahrzeug zu Fahrzeug unterschiedlich hoch sein kann:

- Synchronisiervorgänge (hier wirkt im Triebstrang das im Allgemeinen unbekannte Synchronmoment)

- Schaltungen, insbesondere Überschneidungsschaltungen bei Doppelkupplungsgetrieben

- Betriebszustände des Antriebsmotors, in denen die Motorsteuerung bekanntermaßen das Motormoment in schlechter Qualität sendet (z.B. bei großen Gradienten, im "Turboloch" oder im Schubbetrieb; große Abhängigkeit vom konkret vorliegenden Motor)

- aktuell erkannte Adaptionsfehler in der Kupplungssteuerung

Die Berechnung von $\Delta$mF kann beispielsweise wie folgt erfolgen:

- proportional zum Prädiktionsfehler: $\Delta mF = k*(aS - aSs)$

- entsprechend einer beliebigen, nicht fallenden Kennlinie KL: $\Delta mF = fKL(aS-aSs)$

Eine solche Kennlinie kann beispielsweise eine "Totzone" enthalten, so dass bei kleinen Beträgen des Prädiktionsfehlers |aS - aSs| keine Korrektur erfolgt. Weiterhin könnte die Kennlinie progressiv gestaltet sein (z.B. als Parabel), damit bei großen Prädiktionsfehlern eine stärkere Korrektur erfolgt als bei kleinen Fehlern.

- Es kann eine zeitliche Abhängigkeit eingeführt werden, z.B. mittels eines zusätzlichen Faktors kT = 1/T, wobei T die Zeit seit dem letzten Start des Kupplungs- oder Getriebesteuergeräts oder seit dem letzten Öffnen einer Tür des Fahrzeugs bezeichnet. Hiermit wird erreicht, dass in Phasen kurz nach einer möglichen Beladungsänderung (z.B. ein- oder aussteigende Personen) stärker adaptiert wird als in Phasen, während denen sich die Gesamtmasse allenfalls durch den Kraftstoffverbrauch ändert.

- Die Korrekturgröße $\Delta mF$ wird aus einem applizierbaren, möglicherweise mehrdimensionalen Kennfeld ermittelt, in dem zumindest (aS - aSs), gegebenenfalls auch andere Größen wie T oder sonstige Sensor- oder Zustandssignale ausgewertet werden.

- Die Korrektur wird auch über dynamisch veränderliche Rechenvorschriften berechnet, wie dies beispielsweise in einem Kalmanfilter unter stochastischen Gesichtspunkten geschieht.

Mögliche Lösungen sind jedoch nicht notwendigerweise auf die Vorstehenden beschränkt.

3. Adaption der Kupplungskennlinie

Mit Hilfe des Beschleunigungssensors 38 lässt sich das von der Kupplung übertragene Moment nicht nur aus dem mit Unsicherheiten behafteten Motormomentensignal ableiten, sondern zusätzlich aus der Reaktion des Fahrzeugs auf ein wirksames Motormoment, das sich in dessen Beschleunigung widerspiegelt. Diese alternative Ermittlung des von der Kupplung übertragenen Moments ist insbesondere dann möglich, wenn die Fahrzeugmasse ausreichend genau bekannt ist.

Zum Zweck der Kupplungsmomentenbestimmung, die auch als Grundlage einer Kupplungskennlinienadaption dienen kann, wird die Gleichung (6) nach FA aufgelöst, so dass sich ergibt:

$$FA = mF \cdot aS + FWn \quad (8)$$

Unter Berücksichtigung der aktuellen Getriebeübersetzung und ggf. von Wirkungsgraden des Antriebsstrangs lässt sich daraus das Kupplungsmoment berechnen. Somit steht eine alternative Berechnungsmöglichkeit zur üblichen Ableitung des Kupplungsmoments aus dem Motormoment und der Motordrehzahl sowie deren zeitlicher Ableitung zur Verfügung.

4. Stützung von Raddrehzahlsignalen

Eine weitere vorteilhafte, durch den Beschleunigungssensor eröffnete Möglichkeit ist die Plausibilisierung von Raddrehzahlsignalen sowie die Gewinnung eines Ersatzwertes für die Fahrzeuggeschwindigkeit nach erkannten Raddrehzahlfehlem.

Ausgehend von einem Zustand mit korrekten Raddrehzahlsignalen wird durch Integration des Beschleunigungssignals ein Prädiktionswert für die nächsten gemessenen Raddrehzahlsignale berechnet, wobei das Beschleunigungssignal vor der Integration gefiltert werden kann, um ein Messrauschen zu unterdrücken. Weichen die an einem oder mehreren Rädern gemessenen Drehzahlsignale um mehr als eine vorgegebene Toleranz vom Prädiktionswert ab, kann auf einen Fehler des Drehzahlsignals geschlossen werden. Der Begriff "Fehler" ist dabei sehr allgemein; im Prinzip wird jeder Zustand als Fehler betrachtet, bei dem die Raddrehzahl nicht der Fahrzeuggeschwindigkeit entspricht. Neben Zuständen mit echten Signalfehlern (z.B. Sensorausfall, Kabelbruch, Kommunikationsverlust mit anderen Steuergeräten) zählen dazu das Durchdrehen oder das Blockieren eines Rades, da auch dann kein Rückschluss auf die Fahrzeuggeschwindigkeit möglich ist.

Ein Vorteil der Plausibilisierung der Raddrehzahlsignale liegt darin, dass die Fehlerkennung nicht aufgrund pauschaler Grenzwerte, sondern abhängig von der aktuellen Fahrsituation vorgenommen werden kann. Der Einsatz eines Beschleunigungssensors verringert somit die Risiken eines "Common Mode Fehlers" bezüglich der Raddrehzahlen, bei denen eine einzige Ursache (z.B. Ausfall einer Sicherung) alle Raddrehzahlsignale gleichzeitig eliminiert.

Weiter erlaubt der Beschleunigungssensor die Bestimmung von Ersatzdrehzahlen bzw. - geschwindigkeiten, die als Basis von Steuer- und Schaltstrategien dienen.

Der Antriebsstrang gemäß Figur 1, dessen Aggregate und dessen Sensorbestückung sind nur beispielhaft und können in vielfältiger Weise abgeändert werden, ohne dass die Vorteile der zusätzlichen Verwendung eines Beschleunigungssensors darunter leiden.

Auch das Blockschaltbild gemäß Figur 2 kann in verschiedener Weise abgeändert werden, solange der Zweck erreicht wird, durch Vergleich eines auf Basis einer berechneten Fahrzeugmasse berechneten Beschleunigungssignals mit dem gemessenen Beschleunigungssignal die berechnete Fahrzeugmasse zu verbessern.

Das Ausgangssignal des Beschleunigungssensors 38 kann beispielsweise über CAN-Bus anderen Systemen, beispielsweise einem ESP-System, zugeführt werden.

## Bezugzeichenliste

| | |
|---|---|
| 10 | Antriebsmotor |
| 12 | Kupplung |
| 14 | Getriebe |
| 16 | Kardanwelle |
| 18 | Differential |
| 20 | Hinterrad |
| 22 | Kupplungsaktor |
| 24 | Getriebeaktor |
| 26 | Getriebesteuergerät |
| 28 | Sensor |
| 30 | Wählhebel |
| 34 | Geschwindigkeitsregelanlage |
| 36 | Raddrehzahlsensor |
| 38 | Beschleunigungssensor |
| 40 | Motorsteuergerät |
| 42 | Sensor |
| 44 | Fahrpedal |
| 46 | Sensor |
| 48 | Bremspedal |
| 49 | Sensor |
| 50 | Aktor |
| 52 | Leistungsstellglied |
| 54 | Sensor |
| 56 | Sensor |
| 60 | Bus-Leitung |
| 62 | träge Masse |
| 70 | Differenzglied |
| 72 | Rechenglied |
| 74 | Korrekturglied |
| 76 | Fahrzeugzustandssignalgeber |
| 78 | Adaptionsglied |
| 80 | Verzögerungsglied |
| 82 | Signalgeber |
| 84 | Differenzglied |
| 86 | Signalgeber |

## Patentansprüche

**1.** Verfahren zum Steuern eines Antriebsstrangs eines Kraftfahrzeugs, welcher Antriebsstrang einen Antriebsmotor (10), wenigstens eine von einem Kupplungsaktor (22) betätigte Kupplung (12) und ein Getriebe (14) enthält, wobei der Kupplungsaktor von einem elektronischen Steuergerät (26) in Abhängigkeit von Sensorsignalen gesteuert wird, die Betriebsparameter des Fahrzeugs erfassen, **dadurch gekennzeichnet, dass** wenigstens einer der für die Steuerung der Kupplung (12) maßgeblichen Betriebsparameter unter Nutzung des Ausgangssignals eines Beschleunigungssensors (38) zum direkten Erfassen der Fahrzeugbeschleunigung in Längsrichtung ermittelt werden, mit dem die Fahrzeugbeschleunigung unabhängig von den Raddrehzahlen ermittelt werden kann, wobei das von der Kupplung (12) übertragene Moment bestimmt wird, indem die auf das Fahrzeug wirkende Vortriebskraft aus der Summe des Produkts aus Fahrzeugmasse und der vom Beschleunigungssensor (38) gemessenen Fahrzeugbeschleunigung und der Fahrwiderstandskraft bei ebener Fahrbahn bestimmt wird und aus der Vortriebskraft, der aktuellen Übersetzung und ggf. dem Reibungsmoment des Antriebsstrangs zwischen Kupplung (12) und angetriebenen Fahrzeugrädern (20) das von der Kupplung übertragene Moment bestimmt wird.

2. Verfahren zum Steuern eines Antriebsstrangs eines Kraftfahrzeugs, welcher Antriebsstrang einen Antriebsmotor (10), wenigstens eine Kupplung (12) und ein von einem Getriebeaktor (24) betätigtes Getriebe (14) enthält, wobei der Getriebeaktor von einem elektronischen Steuergerät (26) in Abhängigkeit von Sensorsignalen gesteuert wird, die Betriebsparameter des Fahrzeugs erfassen, **dadurch gekennzeichnet, dass** wenigstens einer der für die Steuerung des Getriebes (14) maßgeblichen Betriebsparameter unter Nutzung des Ausgangssignals eines Beschleunigungssensors (38) zum direkten Erfassen der Fahrzeugbeschleunigung in Längrichtung ermittelt werden, mit dem die Fahrzeugbeschleunigung unabhängig von den Raddrehzahlen ermittelt werden kann, wobei das von der Kupplung (12) übertragene Moment bestimmt wird, indem die auf das Fahrzeug wirkende Vortriebskraft aus der Summe des Produkts aus Fahrzeugmasse und der vom Beschleunigungssensor (38) gemessenen Fahrzeugbeschleunigung und der Fahrwiderstandskraft bei ebener Fahrbahn bestimmt wird und aus der Vortriebskraft, der aktuellen Übersetzung und ggf. dem Reibungsmoment des Antriebsstrangs zwischen Kupplung (12) und angetriebenen Fahrzeugrädern (20) das von der Kupplung übertragene Moment bestimmt wird.

3. Verfahren nach Anspruch 1 oder 2, bei welchem Verfahren aus der zeitlichen Änderung wenigstens einer Raddrehzahl und dem Signal des Beschleunigungssensors (38) der Steigungswinkel der Fahrbahn bestimmt wird, auf der das Fahrzeug fährt.

4. Verfahren nach einem der Ansprüche 1 bis 3, bei welchem Verfahren aus der von dem Antriebsmotor (10) auf das Fahrzeug aufgebrachten Vortriebskraft, der Fahrwiderstandskraft auf ebener Fahrbahn und der Fahrbahnsteigung die Fahrzeugmasse bestimmt wird.

5. Verfahren nach einem der Ansprüche 1 bis 3, bei welchem Verfahren aus der aktuellen Vortriebskraft, dem der aktuellen Fahrzeuggeschwindigkeit entsprechenden nominellen Fahrwiderstand und der letztermittelten Fahrzeugmasse das Ausgangssignal des Beschleunigungssensors geschätzt wird,
das aktuelle Ausgangssignal des Beschleunigungssensors mit dem geschätzten Ausgangssignal verglichen wird und
die Fahrzeugmasse auf Basis des Vergleichsergebnisses aktualisiert wird.

6. Verfahren nach einem der Ansprüche 1 bis 5, bei welchem Verfahren die von einem Drehzahlsensor (36) gemessene Drehzahl eines Fahrzeugrades (20) mit Hilfe des Ausgangssignals des Beschleunigungssensors (38) plausibilisiert wird.

7. Einrichtung zum Steuern eines Antriebsstrangs eines Fahrzeugs, welcher Antriebsstrang einen Antriebsmotor (10), wenigstens eine von einem Kupplungsaktor (22) betätigte Kupplung (12) und ein Getriebe (14) enthält und welche Steuereinrichtung Sensoren (28, 42, 46, 49, 54, 56) zum Erfassen von Betriebsparametern des Fahrzeugs, einen Mikroprozessor und eine elektronische Speichereinrichtung mit einem Programm zur Steuerung des Kupplungsaktors in Abhängigkeit von den Signalen der Sensoren enthält,
wobei die Steuereinrichtung einen Beschleunigungssensor (38) zum direkten Erfassen der Beschleunigung des Fahrzeugs in dessen Längsrichtung enthält, mit dem die Fahrzeugbeschleunigung unabhängig von den Raddrehzahlen ermittelt werden kann und das Programm zum Durchführen eines oder mehrerer der Verfahren nach einem der Ansprüche 1 bis 6 ausgebildet ist.

8. Einrichtung zum Steuern eines Antriebsstranges nach Anspruch 7, wobei ein Getriebeaktor (24) zum Betätigen des Getriebes (14) vorgesehen ist, welcher Getriebeaktor von dem elektronischen Steuergerät (26) in Abhängigkeit von den Sensorsignalen und in der Speichereinrichtung abgelegten Programmen gesteuert wird.

**Claims**

1. Method for controlling a drive train of a motor vehicle, which drive train contains a drive motor (10), at least one clutch (12), which is operated by a clutch actuator (22), and a transmission (14), with the clutch actuator being controlled by an electronic controller (26) as a function of sensor signals which record operating parameters of the vehicle, **characterized in that** at least one of the operating parameters which is important for controlling the clutch (12) is ascertained using the output signal from an acceleration sensor (38) for directly recording the vehicle acceleration in the longitudinal direction, it being possible to ascertain the vehicle acceleration independently of the wheel rotation speed using said acceleration sensor, with the torque transmitted by the clutch (12) being determined by the propulsion force acting on the vehicle being determined from the sum of the product of the vehicle mass and the vehicle acceleration, which is measured by the acceleration sensor (38), and the tractive resistance force on a flat carriageway, and the torque transmitted by the clutch being determined from the propulsion force, the current transmission ratio and possibly the moment of friction of the drive train between the clutch (12) and the driven vehicle wheels (20).

2. Method for controlling a drive train of a motor vehicle, which drive train contains a drive motor (10), at least one clutch (12) and a transmission (14) which is operated by a transmission actuator (24), with the transmission actuator being controlled by an electronic controller (26) as a function of sensor signals which record operating parameters of the vehicle, **characterized in that** at least one of the operating parameters which is important for controlling the transmission (14) is ascertained using the output signal from an acceleration sensor (38) for directly recording the vehicle acceleration in the longitudinal direction, it being possible to ascertain the vehicle acceleration independently of the wheel rotation speed using said acceleration sensor, with the torque transmitted by the clutch (12) being determined by the propulsion force acting on the vehicle being determined from the sum of the product of the vehicle mass and the vehicle acceleration, which is measured by the acceleration sensor (38), and the tractive resistance force on a flat carriageway, and the torque transmitted by the clutch being determined from the propulsion force, the current transmission ratio and possibly the moment of friction of the drive train between the clutch (12) and the driven vehicle wheels (20).

3. Method according to Claim 1 or 2, in which method the gradient angle of the carriageway on which the vehicle is travelling is determined from the change over time in at least one wheel rotation speed and the signal from the acceleration sensor (38).

4. Method according to one of Claims 1 to 3, in which method the vehicle mass is determined from the propulsion force applied to the vehicle by the drive motor (10), the tractive resistance force on a flat carriageway and the carriageway gradient.

5. Method according to one of Claims 1 to 3, in which method the output signal from the acceleration sensor is estimated from the current propulsion force, the nominal travelling speed, which corresponds to the current vehicle speed, and the vehicle mass ascertained last,
the current output signal from the acceleration sensor is compared with the estimated output signal, and
the vehicle mass is updated on the basis of the result of the comparison.

6. Method according to one of Claims 1 to 5, in which method the rotation speed of a vehicle wheel (20) which is measured by a rotation speed sensor (36) is checked for plausibility with the aid of the output signal from the acceleration sensor (38).

7. Device for controlling a drive train of a vehicle, which drive train contains a drive motor (10), at least one clutch (12), which is operated by a clutch actuator (22), and a transmission (14), and which control device contains sensors (28, 42, 46, 49, 54, 56) for recording operating parameters of the vehicle, a microprocessor and an electronic memory device with a program for controlling the clutch actuator as a function of the signals from the sensors,
with the control device containing an acceleration sensor (38) for directly recording the acceleration of the vehicle in the longitudinal direction of said vehicle, it being possible to ascertain the vehicle acceleration independently of the wheel rotation speed using said acceleration sensor, and the program being designed to carry out one or more of the methods according to one of Claims 1 to 6.

8. Device for controlling a drive train according to Claim 7, with a transmission actuator (24) being provided for operating the transmission (14), which transmission actuator is controlled by the electronic controller (26) as a function of the sensor signals and programs stored in the memory device.

**Revendications**

1. Procédé de commande d'une chaîne de propulsion d'un véhicule automobile, ladite chaîne de propulsion comprenant un moteur d'entraînement (10), au moins un accouplement (12) actionné par un actionneur d'accouplement (22) et une boîte de vitesses (14), l'actionneur d'entraînement étant commandé par un contrôleur électronique (26) en fonction de signaux de capteur qui détectent les paramètres de fonctionnement du véhicule, **caractérisé en ce qu'**au moins l'un des paramètres de fonctionnement qui sont déterminants pour la commande de l'accouplement (12) est déterminé en utilisant le signal de sortie d'un capteur d'accélération (38) destiné à la détection directe de l'accélération du véhicule dans le sens longitudinal, lequel permet de déterminer l'accélération du véhicule indépendamment des vitesses de rotation des roues, le moment transmis par l'accouplement (12) étant déterminé en déterminant la force de propulsion qui agit sur le véhicule à partir de la somme du produit de la masse du véhicule et de l'accélération du véhicule mesurée par le capteur d'accélération (38) ainsi que la force de résistance au déplacement dans le cas d'une voie de circulation plane et en déterminant le moment transmis par l'accouplement à partir de la force de propulsion, du rapport de démultiplication actuel et éventuellement du moment de friction de la chaîne de propulsion entre l'accouplement (12) et les roues menées du véhicule (20).

2. Procédé de commande d'une chaîne de propulsion d'un véhicule automobile, ladite chaîne de propulsion comprenant un moteur d'entraînement (10), au moins un accouplement (12) et une boîte de vitesses (14) actionnée par un actionneur de boîte de vitesses (24), l'actionneur de boîte de vitesses étant commandé par un contrôleur électronique (26) en fonction de signaux de capteur qui détectent les paramètres de fonctionnement du véhicule, **caractérisé en ce qu'**au moins l'un des paramètres de fonctionnement qui sont déterminants pour la commande de la boîte de vitesses (14) est déterminé en utilisant le signal de sortie d'un capteur d'accélération (38) destiné à la détection directe de l'accélération du véhicule dans le sens longitudinal, lequel permet de déterminer l'accélération du véhicule indépendamment des vitesses de rotation des roues, le moment transmis par l'accouplement (12) étant déterminé en déterminant la force de propulsion qui agit sur le véhicule à partir de la somme du produit de la masse du véhicule et de l'accélération du véhicule mesurée par le capteur d'accélération (38) ainsi que la force de résistance au déplacement dans le cas d'une voie de circulation plane et en déterminant le moment transmis par l'accouplement à partir de la force de propulsion, du rapport de démultiplication actuel et éventuellement du moment de friction de la chaîne de propulsion entre l'accouplement (12) et les roues menées du véhicule (20).

3. Procédé selon la revendication 1 ou 2, selon lequel l'angle de pente de la voie de circulation sur laquelle se déplace le véhicule est déterminé à partir de la modification dans le temps de la vitesse de rotation d'au moins une roue et du signal du capteur d'accélération (38).

4. Procédé selon l'une des revendications 1 à 3, selon lequel la masse du véhicule est déterminée à partir de la force de propulsion appliquée au véhicule par le moteur d'entraînement (10), la force de résistance au déplacement sur une voie de circulation plane et la pente de la voie de circulation.

5. Procédé selon l'une des revendications 1 à 3, selon lequel le signal de sortie du capteur d'accélération est estimé à partir de la force de propulsion actuelle, de la résistance au déplacement correspondant à la vitesse actuelle du véhicule et de la masse du véhicule déterminée en dernier,
le signal de sortie actuel du capteur d'accélération est comparé avec le signal de sortie estimé et
la masse du véhicule est actualisée en se basant sur le résultat de la comparaison.

6. Procédé selon l'une des revendications 1 à 5, selon lequel la plausibilité de la vitesse de rotation d'une roue du véhicule (20), mesurée par un capteur de vitesse de rotation (36), est déterminée à l'aide du signal de sortie du capteur d'accélération (38).

7. Dispositif de commande d'une chaîne de propulsion d'un véhicule, ladite chaîne de propulsion comprenant un moteur d'entraînement (10), au moins un accouplement (12) actionné par un actionneur d'accouplement (22) et une boîte de vitesses (14) et ledit dispositif de commande comprenant des capteurs (28, 42, 46, 49, 54, 56) pour détecter des paramètres de fonctionnement du véhicule, un microprocesseur et un dispositif de mémorisation électronique avec un programme pour commander l'actionneur d'accouplement en fonction des signaux des capteurs,
le dispositif de commande comprenant un capteur d'accélération (38) destiné à la détection directe de l'accélération du véhicule dans son sens longitudinal, lequel permet de déterminer l'accélération du véhicule indépendamment des vitesses de rotation des roues, et le programme étant conçu pour mettre en oeuvre un ou plusieurs des procédés selon l'une des revendications 1 à 6.

8. Dispositif de commande d'une chaîne de propulsion selon la revendication 7, avec lequel il est prévu un actionneur de boîte de vitesses (24) pour actionner la boîte de vitesses (14), lequel actionneur de boîte de vitesses est commandé par le contrôleur électronique (26) en fonction des signaux de capteur et des programmes enregistrés dans le dispositif de mémorisation.

Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10312209 A1
- DE 69610351 T2
- DE 19946335 A1
- DE 69412216 T2